# EUROPÄISCHE PATENTSCHRIFT

(11) **EP 0 840 806 B1**
(45) Veröffentlichungstag und Bekanntmachung des Hinweises auf die Patenterteilung: **04.10.2001**
(21) Anmeldenummer: 96922679.4
(22) Anmeldetag: 18.07.1996
(51) Int. Cl.: C21B 13/00

(54) **VERFAHREN ZUR HERSTELLUNG VON FLÜSSIGEM ROHEISEN ODER STAHLVORPRODUKTEN SOWIE ANLAGE ZUR DURCHFÜHRUNG DES VERFAHRENS**
PROCESS FOR PRODUCING LIQUID PIG IRON OR INTERMEDIATE STEEL PRODUCTS AND INSTALLATION FOR IMPLEMENTING IT
PROCEDE DE FABRICATION DE FONTE BRUTE LIQUIDE OU DE PRODUITS INTERMEDIAIRES ACIERES LIQUIDES, ET INSTALLATION POUR LA MISE EN OEUVRE DE CE PROCEDE

(30) Priorität: 19.07.1995 AT 123695
(43) Veröffentlichungstag der Anmeldung: 13.05.1998
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Werner, Leopold, A-4060 Leonding (AT); WALLNER, Felix, A-4020 Linz (AT); SCHENK, Johannes, A-4040 Linz (AT)
(74) Vertreter: Kopecky, Helmut, Dipl.-Ing.
(86) Internationale Anmeldenummer: AT9600130
(87) Internationale Veröffentlichungsnummer: WO9704138

(56) Entgegenhaltungen:
- EP-A- 0 183 677
- DE-B- 1 154 817
- DE-B- 1 267 692
- DE-B- 2 660 884
- FR-A- 1 257 877
- US-A- 3 002 736
- US-A- 3 607 224

## Beschreibung

Die Erfindung betrifft ein Verfahren zur Herstellung von flüssigem Roheisen oder Stahlvorprodukten aus feinteilchenförmigem eisenhältigem Material, insbesondere reduziertem Eisenschwamm, in einer Einschmelzvergasungszone eines oberhalb der Einschmelzvergasungszone einen Beruhigungsraum für in der Einschmelzvergasungszone gebildetes Export-Reduktionsgas aufweisenden Einschmelzvergasers, in dem unter Zuführen von stückigem kohlenstoffhältigem Material mittels einer ersten Zuführung und unter Zuführen von sauerstoffhältigem Gas in die Einschmelzvergasungszone bei gleichzeitiger Bildung eines über eine Reduktionsgas-Ableitung abgezogenen Export-Reduktionsgases in einem aus festen stückigen Kohlenstoffträgern gebildeten Bett das eisenhältige Material eingeschmolzen wird, gegebenenfalls nach vorheriger Fertigreduktion, wobei das sauerstoffhältige Gas im unteren Bereich des Bettes zugeführt wird.

Aus der EP-B - 0 010 627 ist ein Verfahren zur Herstellung von flüssigem Roheisen oder Stahlvorprodukten aus teilchenförmigem, eisenhältigem Material, insbesondere vorreduziertem Eisenschwamm, sowie zur Erzeugung von Reduktionsgas in einem Einschmelzvergaser bekannt, bei dem durch Zugabe von Kohle und durch Einblasen von sauerstoffhältigem Gas ein Wirbelbett aus Kokspartikeln gebildet wird. Das sauerstoffhältige Gas bzw. reiner Sauerstoff wird hierbei im unteren Bereich des Einschmelzvergasers eingeblasen. Das teilchenformige eisenhältige Material, insbesondere vorreduzierter Eisenschwamm, und die stückige Kohle werden durch Chargieröffnungen in der Haube des Einschmelzvergasers von oben zugeführt, die fallenden Teilchen werden im Wirbelbett abgebremst und die eisenhältigen Teilchen werden während des Durchfallens durch das Koksfließbett reduziert und geschmolzen. Das aufgeschmolzene, von Schlacke bedeckte Metall sammelt sich am Boden des Einschmelzvergasers. Metall und Schlacke werden durch getrennte Abstichöffnungen abgezogen.

Ein Verfahren dieser Art ist jedoch für die Verarbeitung von feinteiligem Eisenschwamm und feinteilchenförmiger Kohle nicht geeignet, da feinteilige Feststoffteilchen infolge der starken Gasströmung im Einschmelzvergaser sofort aus diesem ausgetragen werden würden. Das Austragen wird noch durch die Temperatur im oberen Bereich des Einschmelzvergasers begünstigt, da diese zu nieder ist, um ein Einschmelzen des Eisenschwammes am Ort der Einbringung sicherzustellen.

Ein Verfahren zur Herstellung von flüssigem Eisen aus feinteilchenförmigem eisenoxidhältigem Material, bei dem unter Zuführung von kohlenstoffhältigem Material, eisenoxidhältigem Material und sauerstoffhältigem Gas mittels eines Sauerstoffbrenners unter Bildung einer Hochtemperaturbrennzone, bei dem es auch zur Bildung von reduzierendem Gas kommt und bei dem das eisenoxidhältige Material in einem aus festen stückigen Kohlenstoffträgern gebildeten Bett reduziert und eingeschmolzen wird, ist aus der DE 26 60 884 A bekannt.

Gemäß der DE-A 26 60 884 A ist eine vollständige Verbrennung des im Reaktor gebildeten Gases im Reaktor selbst beabsichtigt.

Das metalloxidhältige Material wird beim Abwärtsfallen durch einen Schacht durch Kontakt mit heißen Verbrennungsgasen zum Schmelzen gebracht und anschließend durch Kontakt mit zugeführtem Reduktionsmittel in ein vorreduziertes Produkt überführt, das in einem an den unteren Teil des Schachtes angeschlossenen Reaktor fertigreduziert wird.

Dieses Dokument beschäftigt sich nicht mit dem Problem des Austragens von Feinteilchen eines eisenhältigen Materials im Abgas.

Aus der US-A - 5,082,251 ist es bekannt, eisenhältiges Feinerz im Wirbelschichtverfahren mit Hilfe eines aus Erdgas erzeugten Reduktionsgases direkt zu reduzieren. Hierbei wird das eisenreiche Feinerz in einem System von in Serie angeordneten Wirbelschichtreaktoren mit Hilfe von Reduktionsgas unter erhöhtem Druck reduziert. Das so erzeugte Eisenschwammpulver wird anschließend einer Heiß- oder Kaltbrikettierung unterworfen. Für eine Weiterverarbeitung des Eisenschwammpulvers sind eigene Einschmelzanlagen vorzusehen. Eine Verarbeitung von feinteilchenförmiger Kohle ist hierbei nicht möglich.

Aus der EP-B - 0 111 176 ist es bekannt, Eisenschwammpartikel und flüssiges Roheisen aus stückigem Eisenerz herzustellen, wobei das Eisenerz in einem Direktreduktions-Aggregat direktreduziert wird und aus dem Direktreduktion-Aggregat ausgetragene Eisenschwammpartikel in eine Grob- und Feinkornfraktion getrennt werden. Die Feinkornfraktion wird einem Einschmelzvergaser zugeführt, in dem aus eingebrachter Kohle und zugeführtem sauerstoffhältigem Gas die zum Schmelzen des Eisenschwammes erforderliche Wärme sowie das dem Direktreduktions-Aggregat zugeführte Reduktionsgas erzeugt werden. Hierbei ist zwar der Einsatz von Kohle möglich, jedoch nur in stückiger Form; feinteilchenförmige Kohle würde mit dem Reduktionsgas aus dem Einschmelzvergaser ausgetragen werden.

Bei einem Verfahren gemäß der EP-A - 0 576 414 werden stückige eisenerzhältige Einsatzstoffe in einem Reduktionsschachtofen direkt reduziert, u.zw. mittels des in der Einschmelzvergasungszone gebildeten Reduktionsgases. Der so erhaltene Eisenschwamm wird dann der Einschmelzvergasungszone zugeführt. Um bei diesem bekannten Verfahren zusätzlich Feinerz und/oder Erzstaub, wie in einem Hüttenwerk anfallenden oxidischen Eisenfeinstaub, verwerten zu können, wird das Feinerz und/oder der Erzstaub mit Koksstaub einem in die Einschmelzvergasungszone arbeitenden Staubbrenner zugeführt und in einer unterstöchiometrischen Verbrennungsreaktion umgesetzt. Ein solches Verfahren erlaubt eine effiziente Aufarbeitung von in einem Hüttenwerk anfallendem Feinerz und/oder Erzstaub, u.zw. bis zu einer Größenordnung von 20 bis 30 % des Gesamterzeinsatzes, und so ein kombiniertes Verarbeiten von Stückerz und Feinerz und auch das Verarbeiten von Koksstaub. Der Einsatz von Kohlestaub wäre jedoch problematisch, da es durch das heiße reduzierte Erz zur Entgasung und Teerbildung und damit zu Anbackungen im Förderrohr kommen würde.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, bei welchen ein Verarbeiten von feinteilchenförmiger Kohle und feinteilchenförmigem eisenhältigem Material möglich ist. Hierbei soll einerseits ein Austragen der zugeführten Feinteilchen durch das im Einschmelzvergaser erzeugte Reduktionsgas zuverlässig vermieden werden und andererseits ein gegebenenfalls erforderliches Fertigreduzieren des eisenhältigen Materials gesichert sein. Die Erfindung stellt sich insbesondere die Aufgabe, ein Verfahren zu schaffen, mit dem unter Einsatz von feinteilchenförmiger Kohle ein zu 100 % aus feinteilchenförmigem eisenhältigem Material bestehender Einsatz zu Roheisen und/oder Stahlvormaterial unter Verwendung eines Einschmelzvergasers verarbeitet werden kann.

Diese Aufgabe wird erfindungsgemäß bei einem Verfahren der eingangs beschriebenen Art dadurch gelöst, daß im Nahbereich der Reduktionsgas-Ableitung des Einschmelzvergasers eine weitere, zusätzliche, von der Zuführung von eisenhältigem Material unabhängige Zuführung für feinteilchenförmige Kohle, wie Kohlestaub und/oder andere kohlenstoffhältige Materialien mit Flüchtigenanteil, und ebenfalls im Nahbereich der Reduktionsgas-Ableitung des Einschmelzvergasers eine weitere, von der Zuführung von eisenhältigem Material unabhängige, ein sauerstoffhältiges Gas zuführende Leitung einmünden, daß die so zusätzlich zugeführte feinteilchenförmige Kohle und/oder andere kohlenstoffhältige Materialien mit Flüchtigenanteil bei Einleitung in den Einschmelzvergaser zu feinteilchenförmigem Koks umgesetzt werden und der so gebildete feinteilchenförmige Koks gemeinsam mit dem aus dem Einschmelzvergaser abgeleiteten Reduktionsgas ausgetragen und abgeschieden wird. Erfindungsgemäß wird in einfacher Weise die feinteilchenförmige Kohle in Koks unter Ausnützung des durch die starke Reduktionsgasströmung bewirkten Austragseffektes umgewandelt. Dieser feinteilige Koks ist für die weitere Verwendung wesentlich leichter handhabbar, da eine Entgasung und Teerbildung nicht mehr zu befürchten ist. Als andere kohlenstoffhältige Materialien mit Flüchtigenanteil kommen z.B. Kunststoffschredder oder feinteiliger Petrolkoks in Frage.

Vorzugsweise wird der feinteilchenförmige Koks gemeinsam mit dem gegebenenfalls mittels des Reduktionsgases vorgewärmten und/oder reduzierten feinteilchenförmigen eisenhältigen Material dem Einschmelzvergaser zugeführt, wobei gemäß einer bevorzugten Ausführungsform in einer oberhalb des Bettes gebildeten Beruhigungszone eine Hochtemperatur-Brenn- und/oder Vergasungszone durch Verbrennung und/oder Vergasung des dem Einschmelzvergaser zugeführten feinteilchenförmigen Kokses unter direkter Sauerstoffzufuhr gebildet wird, in die das feinteilchenförmige eisenhältige Material direkt eingeleitet wird, wobei durch die bei der Umsetzung des feinteilchenförmigen Kokses freiwerdende Wärme zumindest ein Oberflächen-Anschmelzen des eisenhältigen Materials und ein Agglomerieren desselben durchgeführt wird.

Die so gebildeten Agglomerate weisen wegen ihrer höheren Masse eine höhere Sinkgeschwindigkeit auf. Hierdurch und durch ihren besseren Formfaktor, d.h. günstigeren C_{w}-Wert infolge weitgehender Kugelbildung, wird ein Austrag des eisenhältigen Materials durch das aus dem Einschmelzvergaser abgeleitete Reduktionsgas verhindert.

Aus der EP-A - 0 217 331 ist es bekannt, Feinerz in einem Wirbelschichtverfahren direkt vorzureduzieren und das vorreduzierte Feinerz in einen Einschmelzvergaser zu leiten und mittels eines Plasmabrenners unter Zuführung kohlenstoffhältigen Reduktionsmittels fertig zu reduzieren und aufzuschmelzen. In dem Einschmelzvergaser bildet sich ein Fließbett und darüber ein Wirbelbett aus Koks. Das vorreduzierte Feinerz bzw. das Eisenschwammpulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzensammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Zur Erzielung einer möglichst gleichmäßigen und vollständigen Mischung und Aufarbeitung der zugeführten Feststoffe wird erfindungsgemäß vorteilhaft die Hochtemperatur-Brenn- und/oder Vergasungszone zentral und am oberen Ende des Einschmelzvergasers gebildet und erfolgt die Zufuhr der Materialien nach unten gerichtet, wobei zweckmäßig das Agglomerieren unter Verwirbeln des eisenhältigen Materials in der Hochtemperatur-Brenn- und/oder Vergasungszone beschleunigt und intensiviert wird sowie weiters vorteilhaft die Zufuhr des Sauerstoffes in die Hochtemperatur-Brenn- und/oder Vergasungszone ebenfalls unter Verwirbelung erfolgt.

Gemäß einer bevorzugten Ausführungsvariante wird das eisenhältige Material vermischt mit dem feinteilchenförmigen Koks in die Hochtemperatur-Brenn- und/oder Vergasungszone eingeleitet.

Zusätzlich ist es von Vorteil, wenn die Eintrittsgeschwindigkeit des eisenhältigen Materials in die Hochtemperatur-Brenn- und/oder Vergasungszone mittels eines Treibgases, wie Stickstoff oder prozeßeigenes Gas, erhöht wird.

Gemäß einer bevorzugten Ausführungsform wird in der Einschmelzvergasungszone gebildetes Reduktionsgas einer Vorwärmzone und/oder einer Direktreduktionszone zur Vorbehandlung des eisenhältigen Materials zugeführt, wobei das vorgewärmte und/oder reduzierte eisenhältige Material im heißen Zustand der Hochtemperatur-Brenn- und/oder Vergasungszone zugeführt wird. Vorteilhaft kann hierbei der Vorwärm- bzw. Direktreduktionszone zusätzlich feinteilchenförmiger Koks zugeführt werden.

Zur Bildung des aus festen Kohlenstoffträgern gebildeten Bettes wird vorteilhaft in die Einschmelzvergasungszone zusätzlich stückige Kohle eingebracht.

Eine bevorzugte Variante ist dadurch gekennzeichnet, daß in der Vorwärm- und/oder Direktreduktionszone eine Trennung des eisenhältigen Materials in eine Feinkornfraktion und eine Grobkornfraktion, letztere vorzugsweise mit Teilchen zwischen 0,5 und 8 mm, durchgeführt wird und nur die Feinkornfraktion der Hochtemperatur-Brenn- und/oder Vergasungszone und die Grobkomfraktion direkt in den Einschmelzvergaser, vorzugsweise dessen Beruhigungszone, eingebracht werden. Die gröberen Anteile des reduzierten Eisenerzes können allein durch Schwerkraft chargiert werden, sie würden bei Zugabe in die Hochtemperatur-Brenn- und/oder Vergasungszone lediglich Wärme verbrauchen. Diese Wärme steht somit den Feinteilchen zur Agglomerierung zur Verfügung. Der zur Bildung der Hochtemperatur-Brenn- und/oder Vergasungszone dienende Brenner kann somit effektiver wirken und gegebenenfalls, ohne die Agglomerierung zu beeinträchtigen, kleiner dimensioniert werden.

Eine weitere bevorzugte Variante ist dadurch gekennzeichnet, daß das Reduktionsgas der Vorwärmzone und/oder Direktreduktionszone ungereinigt zugeführt wird. Hierdurch kann kohlenstoffhältiger Staub aus dem Einschmelzvergaser in der Vorwärm- und/oder Direktreduktionszone abgeschieden werden.

Eine Anlage zur Durchführung des Verfahrens mit einem Einschmelzvergaser mit Zu- und Ableitungen für die Zugabe von eisenhältigem Material, für den Abzug des erzeugten Reduktionsgases und für die Zuführung von sauerstoffhältigem Gas in einen ein Bett aus kohlenstoffhältigem Material aufweisenden Abschnitt, sowie einer ersten Zuführung für stückiges kohlenstoffhältiges Material, sowie weiters mit einem Schlacken- und Eisenschmelzenabstich, wobei ein unterer Abschnitt des Einschmelzvergasers zum Auffangen des geschmolzenen Roheisens bzw. Stahlvormaterials und der flüssigen Schlacke, ein darüber liegender mittlerer Abschnitt zur Aufnahme des Bettes aus kohlenstoffhältigem Material und anschließend ein oberer Abschnitt als Beruhigungsraum vorgesehen sind, und wobei das sauerstoffhältige Gas über eine im unteren Bereich des Bettes in den Einschmelzvergaser einmündende Zuführung einbringbar ist, ist dadurch gekennzeichnet, daß der Einschmelzvergaser - zusätzlich zur ersten Zuleitung für stückiges kohlenstoffhältiges Material - im Nahbereich der Öffnung der Reduktionsgas-Ableitung einen Brenner zur Zufuhr von feinteilchenförmiger Kohle und/oder anderen kohlenstoffhältigen Materialien mit Flüchtigenanteil - unabhängig von der Zuleitung für eisenhältiges Material sowie eine Zuführung für ein sauerstoffhältiges Gas - aufweist, und daß in der Reduktionsgas-Ableitung ein Abscheider zur Abscheidung von mit dem Reduktionsgas ausgetragenem feinteilchenförmigem Koks vorgesehen ist.

Vorzugsweise sind am oberen Ende des Beruhigungsraumes ein ein sauerstoffhältiges Gas und feinteilchenförmiges eisenhältiges Material zuführender Brenner und eine Zuführeinrichtung zur Zufuhr des feinteilchenförmigen Kokses vorgesehen.

Bevorzugt ist ein einziger zentral, d.h. an der vertikalen Längsmittelachse des Einschmelzvergasers angeordneter Brenner vorgesehen, dessen Brennermund'gegen die Oberfläche des Bettes gerichtet ist.

Zweckmäßig erfolgt die Zufuhr des feinteilchenförmigen Kokses ebenfalls über den Brenner, wobei dieser vorteilhaft als Sauerstoff-Kohlenstoff-Brenner ausgebildet ist.

Zur Erzielung einer guten Durchmischung der dem Brenner zugeführten Feststoffe untereinander sowie mit dem zugeführten sauerstoffhältigen Gas ist vorteilhaft der Brenner mit einer Verwirbelungseinrichtung für die über den Brenner zugeführten Feststoffe sowie weiters zweckmäßig mit einer Verwirbelungseinrichtung für das über den Brenner zugeführte sauerstoffhältige Gas versehen.

Eine einfache Brennerausführung ergibt sich, wenn in den Brenner eine Mischgut-Leitung zur Zuführung des feinteilchenförmigen eisenhältigen Materials und des feinteilchenförmigen Kokses mündet.

Gemäß einer weiteren bevorzugten Ausführungsform mündet eine Reduktionsgas-Ableitung, vom Beruhigungsraum des Einschmelzvergasers ausgehend, in eine Einrichtung zum Vorwärmen und/oder Direktreduzieren des feinteilchenförmigen eisenhältigen Materials.

Vorzugsweise weist die Einrichtung zum Vorwärmen und/oder Direktreduzieren eine Fraktioniereinrichtung zur Trennung des eisenhältigen Materials in eine Grob- und eine Feinkornfraktion auf und ist die Feinkornfraktion über eine Leitung zum Brenner geführt, wogegen die Grobkornfraktion über eine Leitung zum Einschmelzvergaser direkt zugeführt wird.

Zweckmäßig mündet die Reduktionsgasableitung in die Einrichtung zum Vorwärmen und/oder Direktreduzieren direkt, d.h. ohne Zwischenschaltung eines Staubabscheiders.

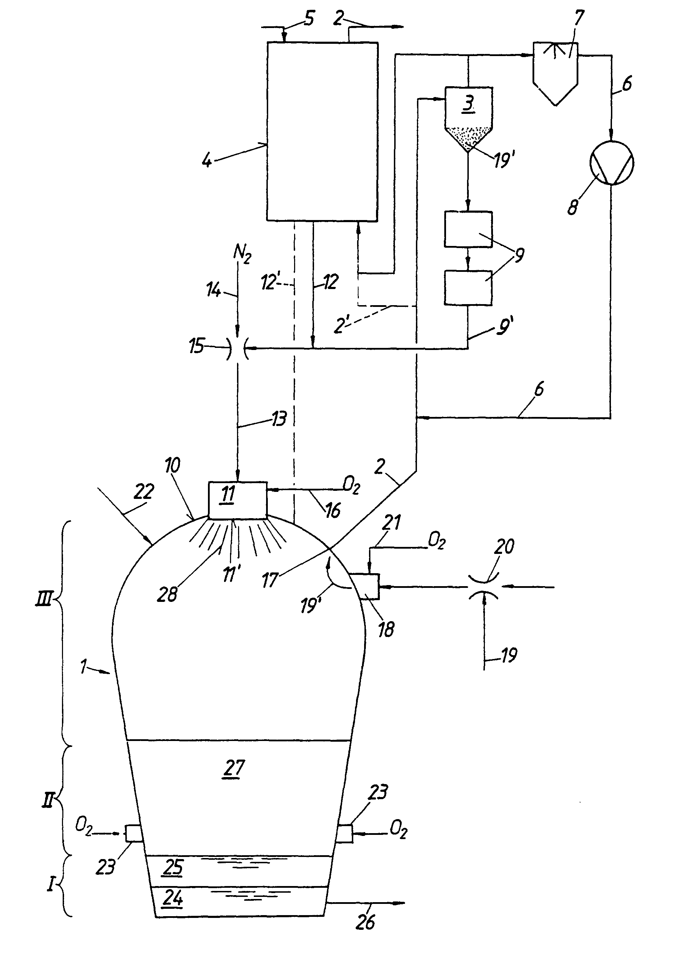

Die Erfindung ist nachstehend anhand eines Ausführungsbeispieles näher erläutert, wobei die Figur in schematischer Darstellung eine Anlage zur Durchführung des erfindungsgemäßen Verfahrens veranschaulicht.

Mit 1 ist ein Einschmelzvergaser bezeichnet, in dem aus Kohle und sauerstoffhältigem Gas ein CO- und H₂-hältiges Reduktionsgas erzeugt wird. Dieses Reduktionsgas wird über eine Reduktionsgas-Ableitung 2, die in einen Gasreinigungs-Zyklon 3 mündet, aus dem Einschmelzvergaser 1 abgeleitet und vom Zyklon 3 einem Reaktor 4 zum Vorwärmen und/oder Reduzieren von feinteiligem eisenhältigem Material 5, wie z.B. eisenhältigen Stäuben, insbesondere Erzstäuben, Eisenschwammstäuben etc., zugeführt. Ein Teil des über die Reduktionsgas-Ableitung 2 abgeleiteten Reduktionsgases wird mittels einer Rücklaufleitung 6 über einen Wäscher 7 und einen Kompressor 8 wiederum in die Reduktionsgas-Ableitung 2 rezirkuliert, um das Reduktionsgas auf die für den Einsatz im Reaktor 4 erforderliche Temperatur zu kühlen.

Der Reaktor 4 ist vorteilhaft als Schachtofen ausgebildet. Anstelle des Schachtofens könnte auch ein Drehrohrofen oder ein Drehherd vorgesehen sein. Weiters könnten anstelle des einzigen Reaktors 4 mehrere in Serie hintereinander geschaltete Wirbelschichtreaktoren vorgesehen sein, wobei das Feinerz von Wirbelschichtreaktor zu Wirbelschichtreaktor über Förderleitungen geleitet wird, u.zw. ähnlich, wie in der US-A - 5,082,251 beschrieben.

Die im Zyklon 3 abgeschiedenen Feinteilchen, die im wesentlichen - wie später noch erläutert wird - von Koksteilchen bzw. Koksstaub gebildet sind, werden über Sammelbehälter 9 mittels einer Rückführleitung 9' einem am oberen Ende, d.h. dem Kopf 10 bzw. der Haube, des Einschmelzvergasers 1 zentral angeordneten Brenner 11 zugeführt, mittels dem das über die Leitung 12 aus dem Reaktor 4 zugeführte feinteilchenförmige eisenhältige Material 5 in den Einschmelzvergaser 1 eingebracht wird. Vor Einleitung in den Einschmelzvergaser 1 wird der Koksstaub mit dem feinteilchenförmigen eisenhältigen Material 5 gemischt und über eine Mischgutleitung 13 dem Brenner 11 zugeführt, wobei zur Erhöhung der Eintrittsgeschwindigkeit der dem Brenner 11 zugeführten Feststoffe in die Mischgutleitung 13 eine Treibgasleitung 14 über einen Injektor 15 einmündet. Als Treibgas wird beispielsweise Stickstoff eingesetzt. In den Brenner 11 mündet weiters eine ein sauerstoffhältiges Gas zuführende Leitung 16.

Der Brennermund 11' kann beispielsweise, wie in der EP-A - 0 481 955 beschrieben, ausgestaltet sein, wobei die Mischgutleitung 13 in ein zentrales Innenrohr des Brenners 11 mündet, das von einem das sauerstoffhältige Gas zuführenden Ringspalt umgeben ist. Prinzipiell könnte der Koks auch über eigene Lanzen zum Brennermund 11' gefördert werden. Vorteilhaft wird mit Hilfe des Brenners 11 durch eine Verdralleinrichtung (z.B. schraubenlinienförmig gestaltete Austrittskanäle) der dem Brenner 11 zugeführte Feststoff beim Austritt aus dem Brenner 11 verdrallt. Zusätzlich kann noch eine Verdrallung des über einen Ringraum zugeführten Sauerstoffstrahles stattfinden, wodurch eine besonders gute Mischung erzielt wird.

Der mit dem Reduktionsgas aus dem Einschmelzvergaser 1 ausgetragene feinteilchenförmige Koks bzw. Koksstaub wird wie folgt gebildet:

Im Nahbereich der Öffnung 17 bzw. von mehreren Öffnungen 17 der Reduktionsgas-Ableitung 2 des Einschmelzvergasers 1 mündet ein Brenner 1 zur Zufuhr von feinteilchenförmiger Kohle 19 und/oder anderen kohlenstoffhältigen Materialien mit Flüchtigenanteil. In Frage kommen z.B. Kunststoffschredder oder feinteiliger Petrolkoks. Diese werden mittels eines Treibgases, wie Stickstoff, das über einen Injektor 20 zugeleitet wird, dem Brenner 18 zugeführt. In den Brenner 18 mündet weiters eine ein sauerstoffhältiges Gas zuführende Leitung 21.

Es kommt zu einer Umsetzung - einer Teilverbrennung - der zugeführten Feinkohle 19 zu feinteilchenförmigem Koks bzw. Koksstaub 19', der durch die Anordnung des Brenners 18 im Nahbereich der Öffnung 17 der Reduktionsgas-Ableitung 2 nahezu vollständig mit dem Reduktionsgas ausgetragen und in dem Zyklon 3 abgeschieden wird.

Der Einschmelzvergaser 1 weist an seinem oberen Ende 10 eine Zuführung 22 für stückige Kohlenstoffträger, wie Kohle, sowie weiter unten angeordnete Zuführungen 23 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf.

In dem Einschmelzvergaser 1 sammelt sich in einem unteren Abschnitt I schmelzflüssiges Roheisen 24 bzw. schmelzflüssiges Stahlvormaterial und schmelzflüssige Schlacke 25, die über einen Abstich 26 abgestochen werden.

In einem über dem unteren Abschnitt I angeordneten Abschnitt II des Einschmelzvergasers 1 kommt es zur Ausbildung eines Festbettes und/oder eines Fließbettes 27 aus den eingesetzten festen Kohlenstoffträgern. In diesen Abschnitt II münden die Zuführungen 23 für sauerstoffhältige Gase. Ein oberhalb des mittleren Abschnittes II vorgesehener oberer Abschnitt III fungiert als Beruhigungsraum für das sich im Einschmelzvergaser 1 bildende Reduktionsgas sowie für mit dem Gasstrom mitgerissene Feststoffteilchen. In diesem oberen Abschnitt III befindet sich die Öffnung 17 der Reduktiongas-Ableitung 2 und mündet der die feinteilchenförmige Kohle 19 zuführende Brenner 18.

Am Brennermund 11' des Brenners 11 bildet sich eine Hochtemperatur-Brenn- und/oder Vergasungszone 28, in der die Feinteilchen des eisenhältigen Materials 5 unter Tröpfchenbildung aufgeschmolzen oder zumindest oberflächlich angeschmolzen werden, wodurch es zu Agglomerationen der eisenhältigen Feinteilchen kommt. Hierdurch wird wirkungsvoll verhindert, daß das feinteilchenförmige eisenhältige Material 5 mit dem aus dem Einschmelzvergaser 1 abgeleiteten Reduktionsgas ausgetragen wird.

Die sich bildenden Tröpfchenagglomerate weisen einen größeren hydraulischen Durchmesser und/oder eine höhere Dichte und damit eine höhere Sinkgeschwindigkeit als die Feinteilchen auf. Diese Sinkgeschwindigkeit wird zudem wegen des besseren Formfaktors, d.h. C_{w}-Wertes der sich bildenden Tröpfchenagglomerate, weiter verbessert.

Die Anordnung des Brenners 11 in einem zentrischen Bereich am Kopf 10 des Einschmelzvergasers 1 ermöglicht eine gleichmäßige Mischung der zugeführten Feststoffteilchen und damit eine vollständige Agglomeration. Eine gleichmäßige Einbindung der Eisenträger in das aus festen Kohlenstoffträgern im Einschmelzvergaser gebildete Fest- bzw. Fließbett 27 ist die Folge. Hierdurch gelingt es, den Schmelzreduktionsprozess mit 100 % Feinerz zu verwirklichen und ein Austragen der Eisenträger im festen Zustand aus dem Einschmelzvergaser 1 zu vermeiden.

Die Korngröße der für das erfindungsgemäße Verfahren zum Einsatz gelangenden feinteilchenförmigen Kohle liegt vorzugsweise in einem Bereich von 1 bis 0 cm und die des feinteilchenförmigen eisenhältigen Materials im Bereich von 8 bis 0 cm.

Die dargestellte Staubrückführung über den Zyklon 3 könnte deutlich reduziert und gegebenenfalls auch entfallen, da ein dem Reaktor 4 über die strichliert dargestellte Leitung 2' (die Leitung 2 zwischen dem Zyklon 3 und dem Reaktor 4 kann dann entfallen) zugeführter Staub mit den vorgewärmten bzw. gegebenenfalls vorreduzierten Feststoffen aus dem Reaktor 4 wiederum ausgetragen und dem Brenner 11 zugeführt wird und in der Hochtemperaturzone 28 thermisch genutzt werden kann. In diesem Fall kann also auf den Zyklon 3 verzichtet werden bzw. dieser nur für die rezirkulierte Reduktionsgasmenge ausgelegt sein.

Vorzugsweise könnte der Reaktor 4 mit einer Fraktioniereinrichtung ausgestattet sein, wobei die grobkörnige Fraktion (Teilchen zwischen 0,5 und 8 mm) dem Einschmelzvergaser 1 direkt, z.B. mittels Schwerkraftchargierung über die Leitung 12', und die Feinteilchen der Hochtemperatur-Brenn- und/oder Vergasungszone 28 über die Leitung 12 zugeführt werden.

Hierdurch ergibt sich eine Entlastung des Brenners 11, so daß dessen Wärme ausschließlich für Feinstteilchen, die zur Vermeidung eines Austragens unbedingt agglomeriert werden müssen, zur Verfügung steht. Die Korngröße der Teilchen der Grobkornfraktion sollte so groß sein, daß die Sinkgeschwindigkeit dieser Teilchen etwas höher ist als die Leerrohrgeschwindigkeit in der Zone III des Einschmelzvergasers 1. Hierdurch wird ein Austragen dieser Teilchen verhindert.

### Beispiel:

Für die Erzeugung von 40 t Roheisen/h mit einer Anlage gemäß Zeichnung werden 1.020 kg Kohle/t RE (Roheisen), davon 340 kg Feinkohle/t RE 19 und der Rest als stückige Kohle (bei 22), sowie 1.460 kg feinteilchenförmiges eisenhältiges Material 5/t RE eingesetzt.
• Kohle:
Chemische Analyse der Kohle (Feinkohle 19 und stückige Kohle, Gewichtsanteile, trockene Basis)

| | |
|---|---|
| C | 77,2 % |
| H | 4,6 % |
| N | 1,8 % |
| O | 6,8 % |
| S | 0,5 % |
| Asche | 9,0 % |
| C-fix | 63,0 % |

Korngrößenverteilung der Feinkohle 19
- 500 µm 100%
- 250 µm 85 %
- 100 µm 51 %
- 63 µm 66 %
- 25 µm 21 %

• feinteilchenförmiges eisenhältiges Material:
Chemische Analyse (Gewichtsanteile):

| | |
|---|---|
| Fe_{ges} | 66,3 % |
| Fe₀ | 0,4 % |
| Fe₂O₃ | 94,5 % |
| Glühverluste | 1,0 % |
| Feuchte | 1,0 % |

Korngrößenverteilung
- 4000 µm 100 %
- 1000 µm 97 %
- 500 µm 89 %
- 250 µm 66 %
- 125 µm 25 %

• Zuschläge:
Chemische Analyse (Gewichtsanteile):

| | |
|---|---|
| CaO | 34.2 % |
| MgO | 9,9 % |
| SiO₂ | 14,1 % |
| Al₂O₃ | 0,3 % |
| Fe₂O₃ | 1,1 % |
| MnO | 0,5 *%* |
| Glühverluste | 39,1 % |

Es werden über die als Blasformen ausgebildeten Zuführungen 23 321 Nm³ O₂/t RE zum Vergasen der Kohle ins Bett 27 eingebracht, der Verbrauch des Brenners 11 beträgt 255 Nm³ O₂/t RE und des Brenners 18 75 Nm³ O₂/t RE.
• Roheisen 24:
Chemische Analyse (Gewichtsanteile):

| | |
|---|---|
| C | 4,3 % |
| Si | 0,4 % |
| Mn | 0,09 % |
| P | 0,1 % |
| S | 0,05 % |
| Fe | 95,0 % |

• Exportgas:
Menge: 1.720 Nm³/t RE
Analyse (Volumenanteile):

| | |
|---|---|
| CO | 38,7 % |
| CO₂ | 37,2 % |
| H₂ | 16,4 % |
| H₂O | 2 % |
| N₂ + Ar | 4,6 % |
| CH₄ | 1,1 % |

Heizwert: 7.060 kJ/Nm³

## Patentansprüche

1. Verfahren zur Herstellung von flüssigem Roheisen (24) oder Stahlvorprodukten aus feinteilchenförmigem eisenhältigem Material (5), insbesondere reduziertem Eisenschwamm, in einer Einschmelzvergasungszone eines oberhalb der Einschmelzvergasungszone einen Beruhigungsraum für in der Einschmelzvergasungszone gebildetes Export-Reduktionsgas aufweisenden Einschmelzvergasers (1), in dem unter Zuführen von stückigem kohlenstoffhältigem Material mittels einer ersten Zuführung und unter Zuführen von sauerstoffhältigem Gas bei gleichzeitiger Bildung eines über eine Reduktionsgas-Ableitung (2, 17) abgezogenen Export-Reduktionsgases in einem aus festen stückigen Kohlenstoffträgern gebildeten Bett (27) das eisenhältige Material eingeschmolzen wird, gegebenenfalls nach vorheriger Fertigreduktion, wobei das sauerstoffhältige Gas im unteren Bereich des Bettes (27) zugeführt wird, **dadurch gekennzeichnet, daß** im Nahbereich der Reduktionsgas-Ableitung (2, 17) des Einschmelzvergasers (1) eine weitere, zusätzliche, von der Zuführung von eisenhältigem Material (5) unabhängige Zuführung (18) für feinteilchenförmige Kohle (19), wie Kohlestaub und/oder andere kohlenstoffhältige Materialien mit Flüchtigenanteil, und ebenfalls im Nahbereich der Reduktionsgas-Ableitung (2, 17) des Einschmelzvergasers (1) eine weitere, von der Zuführung von eisenhältigem Material (5) unabhängige, ein sauerstoffhältiges Gas zuführende Leitung (21) einmünden, **daß** die so zusätzlich zugeführte feinteilchenförmige Kohle (19) und/oder andere kohlenstoffhältige Materialien mit Flüchtigenanteil bei Einleitung in den Einschmelzvergaser (1) zu feinteilchenförmigem Koks (19') umgesetzt werden und der so gebildete feinteilchenförmige Koks (19') gemeinsam mit dem aus dem Einschmelzvergaser (1) abgeleiteten Reduktionsgas ausgetragen und abgeschieden wird.

2. Verfahren nach Anspruch 1, **dadurch gekennzeichnet, daß** der feinteilchenförmige Koks (19') gemeinsam mit dem gegebenenfalls mittels des Reduktionsgases vorgewärmten und/oder reduzierten feinteilchenförmigen eisenhältigen Material (5) dem Einschmelzvergaser (1) zugeführt wird.

3. Verfahren nach Anspruch 2, **dadurch gekennzeichnet, daß** in einer oberhalb des Bettes (27) gebildeten Beruhigungszone (III) eine Hochtemperatur-Brenn- und/oder Vergasungszone (28) durch Verbrennung und/oder Vergasung des dem Einschmelzvergaser (1) zugeführten feinteilchenförmigen Kokses (19') unter direkter Sauerstoffzufuhr gebildet wird, in die das feinteilchenförmige eisenhältige Material (5) direkt eingeleitet wird, wobei durch die bei der Umsetzung des feinteilchenförmigen Kokses (19') freiwerdende Wärme zumindest ein Oberflächen-Anschmelzen des eisenhältigen Materials (5) und ein Agglomerieren desselben durchgeführt wird.

4. Verfahren nach Anspruch 3, **dadurch gekennzeichnet, daß** die Hochtemperatur-Brenn- und/oder Vergasungszone (28) zentral und am oberen Ende (10) des Einschmelzvergasers (1) gebildet wird und die Zuführ der Materialien nach unten gerichtet erfolgt.

5. Verfahren nach Anspruch 3 oder 4, **dadurch gekennzeichnet, daß** das Agglomerieren unter Verwirbeln des eisenhältigen Materials (5) in der Hochtemperatur-Brenn- und/oder Vergasungszone (28) beschleunigt und intensiviert wird.

6. Verfahren nach Anspruch 5, **dadurch gekennzeichnet, daß** die Zufuhr des Sauerstoffes in die Hochtemperatur-Brenn- und/oder Vergasungszone (28) ebenfalls unter Verwirbelung erfolgt.

7. Verfahren nach einem oder mehreren der Ansprüche 3 bis 6, **dadurch gekennzeichnet, daß** das eisenhältige Material (5) mit dem feinteilchenförmigen Koks (19') vermischt in die Hochtemperatur-Brenn- und/oder Vergasungszone (28) eingeleitet wird.

8. Verfahren nach einem oder mehreren der Ansprüche 3 bis 7, **dadurch gekennzeichnet, daß** die Eintrittsgeschwindigkeit des eisenhältigen Materials (5) und des feinteilchenförmigen Kokses (19') in die Hochtemperatur-Brenn- und/oder Vergasungszone (28) mittels eines Treibgases, wie Stickstoff oder prozeßeigenes Gas, erhöht wird.

9. Verfahren nach einem oder mehreren der Ansprüche 3 bis 8, **dadurch gekennzeichnet, daß** in der Einschmelzvergasungszone gebildetes Reduktionsgas einer Vorwärmzone und/oder einer Direktreduktionszone zur Vorbehandlung des eisenhältigen Materials (5) zugeführt wird, wobei das vorgewärmte und/oder vorreduzierte eisenhältige Material im heißen Zustand der Hochtemperatur-Brenn- und/oder Vergasungszone zugeführt wird.

10. Verfahren nach Anspruch 9, **dadurch gekennzeichnet, daß** der Vorwärm- bzw. Direktreduktionszone zusätzlich feinteilchenförmiger Koks zugeführt wird.

11. Verfahren nach einem oder mehreren der Ansprüche 1 bis 10, **dadurch gekennzeichnet, daß** zusätzlich stückige Kohle in die Einschmelzvergasungszone eingebracht wird.

12. Verfahren nach einem oder mehreren der Ansprüche 9 bis 11, **dadurch gekennzeichnet, daß** in der Vorwärm- und/oder Direktreduktionszone eine Trennung des eisenhältigen Materials in eine Feinkornfraktion und eine Grobkornfraktion, letztere vorzugsweise mit Teilchen zwischen 0,5 und 8 mm, durchgeführt wird und nur die Feinkornfraktion der Hochtemperatur-Brenn- und/oder Vergasungszone (28) und die Grobkornfraktion direkt in den Einschmelzvergaser, vorzugsweise dessen Beruhigungszone (III), eingebracht werden.

13. Verfahren nach einem oder mehreren der Ansprüche 9 bis 12, **dadurch gekennzeichnet, daß** das Reduktionsgas der Vorwärmzone und/oder Direktreduktionszone ungereinigt zugeführt wird.

14. Anlage zur Durchführung des Verfahrens nach einem oder mehreren der Ansprüche 1 bis 13, mit einem Einschmelzvergaser (1) mit Zu- und Ableitungen (2, 13, 18, 23) für die Zugabe von eisenhältigem Material (5), für den Abzug des erzeugten Reduktionsgases und für die Zuführung von sauerstoffhältigem Gas in einen ein Bett (27) aus kohlenstoffhältigem Material aufweisenden Abschnitt (II), sowie einer ersten Zuführung (22) für stückiges kohlenstoffhältiges Material, sowie weiters mit einem Schlacken- und Eisenschmelzenabstich (26), wobei ein unterer Abschnitt (I) des Einschmelzvergasers (1) zum Auffangen des geschmolzenen Roheisens (24) bzw. Stahlvormaterials und der flüssigen Schlacke (25), ein darüber liegender mittlerer Abschnitt (II) zur Aufnahme des Bettes (27) aus kohlenstoffhältigem Material und anschließend ein oberer Abschnitt (III) als Beruhigungsraum vorgesehen sind, wobei das sauerstoffhältige Gas über eine im unteren Bereich des Bettes (27) in den Einschmelzvergaser (1) einmündende Zuführung (23) einbringbar ist, **dadurch gekennzeichnet, daß** der Einschmelzvergaser (1) - zusätzlich zur ersten Zuleitung für stückiges kohlenstoffhältiges Material - im Nahbereich der Öffnung (17) der Reduktionsgas-Ableitung (2) einen Brenner (18) zur Zufuhr von feinteilchenförmiger Kohle (19) und/oder anderen kohlenstoffhältigen Materialien mit Flüchtigenanteil - unabhängig von der Zuleitung (13) für eisenhältiges Material (5) sowie eine Zuführung für ein sauerstoffhältiges Gas - aufweist, und **daß** in der Reduktionsgas-Ableitung (2) ein Abscheider (3, 4) zur Abscheidung von mit dem Reduktionsgas ausgetragenem feinteilchenförmigem Koks (19') vorgesehen ist.

15. Anlage nach Anspruch 14, **dadurch gekennzeichnet, daß** von dem Abscheider (3) eine Rückführleitung für feinteilchenförmigen Koks (19') in den Einschmelzvergaser (1) mündet.

16. Anlage nach Anspruch 15, **dadurch gekennzeichnet, daß** am oberen Ende des Beruhigungsraumes (III) mindestens ein ein sauerstoffhältiges Gas und feinteilchenförmiges eisenhältiges Material (5) zuführender Brenner (11) und eine Zuführeinrichtung zur Zuführ des feinteilchenförmigen Kokses (19') vorgesehen sind.

17. Anlage nach Anspruch 16, **dadurch gekennzeichnet, daß** ein einziger zentral, d.h. an der vertikalen Längsmittelachse des Einschmelzvergasers (1) angeordneter Brenner (11) vorgesehen ist, dessen Brennermund (11') gegen die Oberfläche des Bettes (27) gerichtet ist.

18. Anlage nach Anspruch 16 oder 17, **dadurch gekennzeichnet, daß** der Brenner (11) als Sauerstoff-Kohlenstoff-Brenner, d.h. auch zur Zufuhr des feinteilchenförmigen Kokses (19') dienend, ausgebildet ist.

19. Anlage nach einem oder mehreren der Ansprüche 16 bis 18, **dadurch gekennzeichnet, daß** der Brenner (11) mit einer Verwirbelungseinrichtung für die über den Brenner (11) zugeführten Feststoffe (5, 19') versehen ist.

20. Anlage nach einem oder mehreren der Ansprüche 16 bis 19, **dadurch gekennzeichnet, daß** der Brenner (11) mit einer Verwirbelungseinrichtung für das über den Brenner (11) zugeführte sauerstoffhältige Gas versehen ist.

21. Anlage nach einem oder mehreren der Ansprüche 16 bis 20, **dadurch gekennzeichnet, daß** in den Brenner eine Mischgut-Leitung (13) zur Zuführung des feinteilchenförmigen eisenhältigen Materials (5) und des feinteilchenförmigen Kokses (19') mündet.

22. Anlage nach einem oder mehreren der Ansprüche 14 bis 20, **dadurch gekennzeichnet, daß** eine Reduktionsgas-Ableitung (2), vom Beruhigungsraum (III) des Einschmelzvergasers (1) ausgehend, in eine Einrichtung (4) zum Vorwärmen und/oder Direktreduzieren des feinteilchenförmigen eisenhältigen Materials (5) mündet.

23. Anlage nach Anspruch 22, **dadurch gekennzeichnet, daß** die Einrichtung (4) zum Vorwärmen und/oder Direktreduzieren eine Fraktioniereinrichtung zur Trennung des eisenhältigen Materials in eine Grob- und eine Feinkornfraktion aufweist und die Feinkornfraktion über eine Leitung (12) zum Brenner (11) geführt ist, wogegen die Grobkornfraktion über eine Leitung (12') zum Einschmelzvergaser (1) direkt zugeführt wird.

24. Anlage nach Anspruch 22 oder 23, **dadurch gekennzeichnet, daß** die Reduktionsgasableitung (2) in die Einrichtung (4) zum Vorwärmen und/oder Direktreduzieren direkt, d.h. ohne Zwischenschaltung eines Staubabscheiders (3), mündet.

## Claims

1. A process for producing molten pig iron (24) or steel preproducts from fine-particulate iron-containing material (5), in particular reduced sponge iron, in a meltdown gasifying zone of a melter gasifier (1) having, above the meltdown gasifying zone, a killing space for export reducing gas formed in the meltdown gasifiying zone, in which melter gasifier, under supply of lumpy carbon-containing material by means of a first supply duct and under supply of oxygen-containing gas at the simultaneous formation of an export reducing gas that is withdrawn through a reducing-gas discharge duct (2, 17) in a bed (27) formed of solid lumpy carbon carriers, the iron-containing material is melted, optionally upon previous complete reduction, wherein the oxygen-containing gas is supplied in the lower area of the bed (27), **characterized in that** in the vicinity of the reducing-gas discharge duct (2, 17) of the melter gasifier (1) a further, additional supply duct (18) independent of the supply of iron-containing material (5) and serving for fine-particulate coal (19), such as coal dust and/or other carbon-containing materials including volatile matter, and also in the vicinity of the reducing-gas discharge duct (2, 17) of the melter gasifier (1) a further duct (21) independent of the supply of iron-containing material (5) and feeding an oxygen-containing gas enter, that the thus additionally supplied fine-particulate coal (19) and/or other carbon-containing materials including volatile matter are reacted to fine-particulate coke (19') upon introduction into the melter gasifier (1), and the fine-particulate coke (19') thus formed is discharged along with the reducing gas carried off the melter gasifier (1) and is separated.

2. A process according to claim 1, **characterized in that** the fine-particulate coke (19') is supplied to the melter gasifier (1) along with the fine-particulate iron-containing material (5) optionally preheated and/or reduced by aid of the reducing gas.

3. A process according to claim 2, **characterized in that** in a killing zone (III) formed above the bed (27) a high-temperature combustion and/or gasification zone (28) is formed by burning and/or gasifying under direct oxygen feeding the fine-particulate coke (19') supplied to the melter gasifier (1), into which high-temperature combustion and/or gasification zone the fine-particulate iron-containing material (5) is directly introduced, wherein at least surface melting of the iron-containing material (5) and agglomerating of the same are effected by the heat released during the reaction of the fine-particulate coke (19').

4. A process according to claim 3, **characterized in that** the high-temperature combustion and/or gasification zone (28) is formed centrally and on the upper end (10) of the melter gasifier (1) and the supply of the materials is effected in a downwardly oriented manner.

5. A process according to claim 3 or 4, **characterized in that** agglomeration is accelerated and intensified by swirling the iron-containing material (5) in the high-temperature combustion and/or gasification zone (28).

6. A process according to claim 5, **characterized in that** oxygen feeding into the high-temperature combustion and/or gasification zone (28) likewise is effected under swirling.

7. A process according to one or several of claims 3 to 6, **characterized in that** the iron-containing material (5) is introduced into the high-temperature combustion and/or gasification zone (28) when mixed with the fine-particulate coke (19').

8. A process according to one or several of claims 3 to 7, **characterized in that** the speed of entry of the iron-containing material (5) and of the fine-particulate coke (19') into the high-temperature combustion and/or gasification zone (28) is increased by aid of a propellant, such as nitrogen or in-process gas.

9. A process according to one or several of claims 3 to 8, **characterized in that** reducing gas formed in the meltdown gasifying zone is fed to a preheating zone and/or a direct-reduction zone for pretreating the iron-containing material (5), the preheated and/or prereduced iron-containing material being supplied to the high-temperature combustion and/or gasification zone in the hot state.

10. A process according to claim 9, **characterized in that** fine-particulate coke is additionally supplied to the preheating and/or direct-reduction zone.

11. A process according to one or several of claims 1 to 10, **characterized in that** lumpy coal is additionally introduced into the meltdown gasifying zone.

12. A process according to one or several of claims 9 to 11, **characterized in that** the iron-containing material in the preheating and/or direct-reduction zone is separated into a fine-grain fraction and a coarse-grain fraction, the latter preferably comprising particles of between 0.5 and 8 mm, and only the fine-grain fraction is introduced into the high-temperature combustion and/or gasification zone (28) and the coarse-grain fraction is introduced directly into the melter gasifier, preferably into its killing space (III).

13. A process according to one or several of claims 9 to 12, **characterized in that** the reducing gas is fed to the preheating and/or direct-reduction zone in a non-purified state.

14. A plant for carrying out the process according to one or several of claims 1 to 13, comprising a melter gasifier (1) including supply and discharge ducts (2, 13, 18, 23) for the addition of iron-containing material (5), for drawing off the reducing gas produced, and for feeding oxygen-containing gas into a section (II) having a bed (27) of carbon-containing material, and including a first supply duct (22) for lumpy carbon-containing material, and further comprising a slag and iron-melt tap (26), a lower section (I) of the melter gasifier (1) being provided for collecting the molten pig iron (24) and/or steel prematerial and the liquid slag (25), a central section (II) located above it being provided for accommodating the bed (27) of carbon-containing material, and finally an upper section (III) being provided as a killing space, wherein the oxygen-containing gas can be introduced via a supply duct (23) running into the melter gasifier (1) in the lower area of the bed (27), **characterized in that** the melter gasifier (1), in addition to the first supply duct for lumpy carbon-containing material, in the vicinity of the opening (17) of the reducing-gas discharge duct (2) comprises a burner (18) for supplying fine-particulate coal (19) and/or other carbon-containing materials having volatile portions - independently of the supply duct (13) for iron-containing material (5) - as well as a supply duct for an oxygen-containing gas and that a separating means (3, 4) for separating fine-particulate coke (19') discharged along with the reducing gas is provided in the reducing-gas discharge duct (2).

15. A plant according to claim 14, **characterized in that** a return duct for fine-particulate coke (19') runs from the separating means (3) into the melter gasifier (1).

16. A plant according to claim 15, **characterized in that** at least one burner (11) supplying an oxygen-containing gas and fine-particulate iron-containing material (5) and a supply means for supplying the fine-particulate coke (19') are provided on the upper end of the killing space (III).

17. A plant according to claim 16, **characterized in that** a single burner (11) arranged centrally, i.e., on the vertical longitudinal central axis of the melter gasifier (1), is provided, whose burner mouth (11') is oriented towards the surface of the bed (27).

18. A plant according to claim 16 or 17, **characterized in that** the burner (11) is configured as an oxygen-carbon burner, i.e., also serves for supplying the fine-particulate coke (19').

19. A plant according to one or several of claims 16 to 18, **characterized in that** the burner (11) is provided with a swirling means for the solids (5, 19') supplied via the burner (11).

20. A plant according to one or several of claims 16 to 19, **characterized in that** the burner (11) is provided with a swirling means for the oxygen-containing gas fed via the burner (11).

21. A plant according to one or several of claims 16 to 20, **characterized in that** a mixed-material duct (13) for supplying the fine-particulate iron-containing material (5) and the fine-particulate coke (19') opens into the burner.

22. A plant according to one or several of claims 14 to 20, **characterized in that** a reducing-gas discharge duct (2) runs into a means (4) for preheating and/or directly reducing the fine-particulate iron-containing material (5), departing from the killing space (III) of the melter gasifier (1).

23. A plant according to claim 22, **characterized in that** the means (4) for preheating and/or direct reduction comprises a fractionating means for separating the iron-containing material into a coarse-grain fraction and a fine-grain fraction and the fine-grain fraction is conducted to the burner (11) via a duct (12), whereas the coarse-grain fraction is directly supplied to the melter gasifier (1) via a duct (12').

24. A plant according to claim 22 or 23, **characterized in that** the reducing-gas discharge duct (2) runs directly into the means (4) for preheating and/or direct reduction, i.e., without intermediate arrangement of a dust-separating means (3).

## Revendications

1. Procédé pour la préparation de fer brut (24), ou de produits précurseurs d'acier, liquide(s) à partir d'un matériau (5) sous forme de fines particules et contenant du fer, en particulier de la mousse de fer réduite, dans une zone de gazéification de fusion d'un gazéificateur de fusion (1) qui comprend, au-dessus de la zone de gazéification de fusion, une chambre de repos pour les gaz de réduction exportés qui se forment dans la zone de gazéification de fusion, gazéificateur dans lequel on met en fusion le matériau contenant du fer, en apportant un matériau en morceaux qui contient du carbone, au moyen d'une première amenée et en apportant un gaz contenant de l'oxygène et en formant simultanément un gaz de réduction exporté que l'on extrait via une conduite d'extraction de gaz de réduction (2, 17), et cela dans un lit (27) formé de produits d'apport de carbone en morceaux solides, le cas échéant après réduction finale préliminaire, dans lequel le gaz contenant de l'oxygène est apporté dans la région inférieure du lit (27), **caractérisé en ce que** dans la région proche de la conduite d'évacuation de gaz de réduction (2, 17) du gazéificateur de fusion (1) débouche une autre admission additionnelle (18), indépendante de l'admission du matériau contenant du fer (5), pour du charbon sous forme de fines particules (19), tel que de la poussière de charbon et/ou d'autres matériaux contenant du carbone avec une proportion volatile, et également dans la région proche de la conduite d'évacuation de gaz de réduction (2, 17) du gazéificateur de fusion (1) débouche une autre conduite (21), indépendante de l'admission du matériau contenant du fer (5), et apportant un gaz contenant de l'oxygène, **en ce que** le charbon (19) sous forme de fines particules et/ou les autres matériaux contenant du carbone avec une proportion volatile ainsi additionnellement apporté(s), sont convertis lors de l'introduction dans le gazéificateur de fusion (1) en coke (19') en fines particules et en ce le coke (19') en fines particules ainsi formé est sorti conjointement avec le gaz de réduction extrait hors du gazéificateur de fusion (1) et séparé.

2. Procédé selon la revendication 1, **caractérisé en ce que** le coke (19') en fines particules est apporté dans le gazéificateur de fusion (1) conjointement avec le matériau contenant du fer (5) sous forme de fines particules, le cas échéant préchauffé et/ou réduit avec le gaz de réduction.

3. Procédé selon la revendication 2, **caractérisé en ce que**, dans une zone de repos (III) formée au-dessus du lit (27), on constitue une zone de combustion et/ou de gazéification (28) à haute température, par combustion et/ou gazéification du coke (19') en fines particules apporté dans le gazéificateur de fusion (1) et avec apport direct d'oxygène, zone dans laquelle le matériau contenant du fer (5) sous forme de fines particules est directement introduit, et **en ce qu'**au moyen de la chaleur qui se libère lors de la conversion du coke (19') en fines particules, on procède au moins à une fusion superficielle du matériau contenant du fer (5) et à une agglomération de celui-ci.

4. Procédé selon la revendication 3, **caractérisé en ce que** la zone de combustion et/ou de gazéification (28) à haute température est formée au centre et à l'extrémité supérieure (10) du gazéificateur de fusion (1), et **en ce que** l'apport des matériaux a lieu en direction vers le bas.

5. Procédé selon l'une ou l'autre des revendications 3 et 4, **caractérisé en ce que** l'agglomération est accélérée et intensifiée par mise en tourbillonnement du matériau contenant du fer (5) dans la zone de combustion et/ou de gazéification (28) à haute température.

6. Procédé selon la revendication 5, **caractérisé en ce que** l'apport d'oxygène dans la zone de combustion et/ou de gazéification (28) à haute température a également lieu avec mise en tourbillonnement.

7. Procédé selon l'une ou plusieurs des revendications 3 à 6, **caractérisé en ce que** le matériau contenant du fer (5) est introduit mélangé avec le coke (19') en fines particules dans la zone de combustion et/ou de gazéification à haute température (28).

8. Procédé selon l'une ou plusieurs des revendications 3 à 7, **caractérisé en ce que** la vitesse d'entrée du matériau contenant du fer (5) et du coke (19') en fines particules dans la zone de combustion et/ou de gazéification (28) à haute température, est augmentée au moyen d'un gaz propulseur, comme de l'azote, ou un gaz appartenant au procédé.

9. Procédé selon l'une ou plusieurs des revendications 3 à 8, **caractérisé en ce que** le gaz de réduction formé dans la zone de gazéification de fusion est apporté à une zone de préchauffage et/ou une zone de réduction directe pour un traitement préliminaire du matériau contenant du fer (5), et **en ce que** le matériau contenant du fer préchauffé et/ou préalablement réduit est apporté à l'état chaud dans la zone de combustion et/ou de gazéification à haute température.

10. Procédé selon la revendication 9, **caractérisé en ce que** l'on apporte additionnellement du coke en fines particules dans la zone de préchauffage, ou respectivement de réduction directe.

11. Procédé selon l'une ou plusieurs des revendications 1 à 10, **caractérisé en ce que** l'on introduit additionnellement du charbon en morceaux dans la zone de gazéification de fusion.

12. Procédé selon l'une ou plusieurs des revendications 9 à 11, **caractérisé en ce que** l'on procède dans la zone de préchauffage et/ou de réduction directe à une séparation du matériau contenant du fer en une fraction à fines particules et en une fraction à particules grossières, cette dernière contenant de préférence des particules entre 0,5 et 8 mm, et **en ce que** seule la fraction à fines particules est introduite dans la zone de combustion et/ou de gazéification (28) à haute température, tandis que la fraction à particules grossières est introduite directement dans le gazéificateur de fusion, de préférence dans sa zone de repos (III).

13. Procédé selon l'une ou plusieurs des revendications 9 à 12, **caractérisé en ce que** le gaz de réduction est apporté sans nettoyage dans la zone de préchauffage et/ou de réduction directe.

14. Installation pour la mise en oeuvre du procédé selon l'une ou plusieurs des revendications 1 à 13, comprenant un gazéificateur de fusion (1) avec des conduites d'amenée et d'évacuation (2, 13, 18, 23) pour l'apport de matériaux contenant du fer (5), pour l'extraction des gaz de réduction produits et pour l'amenée de gaz contenant de l'oxygène, dans un tronçon (II) qui comporte un lit (27) de matériaux contenant du carbone, ainsi qu'une première admission (22) pour du matériau en morceaux et contenant du carbone, ainsi qu'une piquée pour le laitier et pour la fonte de fer (26), dans laquelle un tronçon inférieur (I) du gazéificateur de fusion (1) est prévu pour recueillir le fer brut en fusion (24), ou respectivement le matériau précurseur d'acier et le laitier liquide (25), un tronçon médian (II) disposé au-dessus est prévu pour recevoir le lit (27) de matériaux contenant du carbone, et enfin un tronçon supérieur (III) est prévu à titre de chambre de repos, et dans lequel le gaz contenant de l'oxygène est introduit via une admission (28) qui débouche dans le gazéificateur de fusion (1) dans la région inférieure du lit (27), **caractérisée en ce que** le gazéificateur de fusion (1) comprend, en supplément de la première admission pour le matériau en morceaux contenant du carbone, dans la région proche de l'ouverture (17) de la conduite d'évacuation pour le gaz de réduction (2), un brûleur (18) pour l'admission de charbon (19) en fines particules et/ou d'autres matériaux contenant du carbone avec une proportion volatile, indépendamment de la conduite d'amenée (13) pour le matériau contenant du fer (5), ainsi qu'une admission pour un gaz contenant de l'oxygène, et **en ce qu'**il est prévu dans la conduite d'évacuation de gaz de réduction (2) un séparateur (3, 4) pour la séparation du coke (19') en fines particules sorti avec le gaz de réduction.

15. Installation selon la revendication 14, **caractérisée en ce qu'**une conduite de retour provenant du séparateur (3) pour le coke (19') en fines particules débouche dans le gazéificateur de fusion (1).

16. Installation selon la revendication 15, **caractérisée en ce qu'**il est prévu à l'extrémité supérieure de la chambre de repos (III) au moins un brûleur (11) qui apporte un gaz contenant de l'oxygène et matériaux contenant du fer en fines particules (5), et un dispositif d'amenée pour l'apport du coke (19') en fines particules.

17. Installation selon la revendication 16, **caractérisée en ce qu'**il est prévu un unique brûleur (11) agencé au centre, c'est-à-dire au niveau de l'axe longitudinal vertical du gazéificateur de fusion (1), dont l'embouchure (11') est dirigée vers la surface du lit (27).

18. Installation selon l'une ou l'autre des revendications 16 et 17, **caractérisée en ce que** le brûleur (11) est réalisé sous la forme d'un brûleur à oxygène-et-charbon, c'est-à-dire servant également à l'admission du coke (19') en fines particules.

19. Installation selon l'une ou plusieurs des revendications 16 à 18, **caractérisée en ce que** le brûleur (11) est pourvu d'un dispositif de tourbillonnement pour les matières solides (5, 19') amenées via le brûleur (11).

20. Installation selon l'une ou plusieurs des revendications 16 à 19, **caractérisée en ce que** le brûleur (11) est pourvu d'un dispositif de tourbillonnement pour le gaz contenant de l'oxygène amené via le brûleur (11).

21. Installation selon l'une ou plusieurs des revendications 16 à 20, **caractérisée en ce qu'**une conduite de mélange (13) débouche dans le brûleur pour l'admission du matériau contenant du fer en fines particules (5) et du coke (19') en fines particules.

22. Installation selon l'une ou plusieurs des revendications 14 à 20, **caractérisée en ce qu'**une conduite d'évacuation de gaz de réduction (2), partant de la chambre de repos (III) du gazéificateur de fusion (1), débouche dans un dispositif (4) pour le préchauffage et/ou la réduction directe du matériau contenant du fer en fines particules (5).

23. Installation selon la revendication 22, **caractérisée en ce que** le dispositif (4) pour le préchauffage et/ou pour la réduction directe comprend un dispositif de fractionnement pour la séparation du matériau contenant du fer en une fraction à particules grossières et en une fraction à particules fines, et **en ce que** la fraction à particules fines est amenée au brûleur (11) via une conduite (12), tandis que la fraction à particules grossières est amenée directement au gazéificateur de fusion (1) via une conduite (12').

24. Installation selon l'une ou l'autre des revendications 22 et 23, **caractérisée en ce que** la conduite d'évacuation du gaz de réduction (2) débouche directement dans le dispositif (4) de préchauffage et/ou de réduction directe, c'est-à-dire sans interposition d'un séparateur à poussières (3).
